# EUROPÄISCHE PATENTSCHRIFT

(11) **EP 3 663 015 B1**
(45) Veröffentlichungstag und Bekanntmachung des Hinweises auf die Patenterteilung: **29.03.2023**
(21) Anmeldenummer: 19211754.7
(22) Anmeldetag: 27.11.2019
(51) Int. Cl.: B21F 1/00, B21D 11/10, H02K 15/04

(54) **MASCHINE ZUM HERSTELLEN VON DRAHTELEMENTEN**
MACHINE FOR MANUFACTURING WIRE ELEMENTS
MACHINE DE FABRICATION D'ÉLÉMENTS DE FIL

(30) Priorität: 06.12.2018 DE 102018221152
(43) Veröffentlichungstag der Anmeldung: 10.06.2020
(73) Patentinhaber: Otto Bihler Handels-Beteiligungs-GmbH, 87642 Halblech (DE)
(72) Erfinder: Haußmann, Bernd, 87645 Schwangau (DE)
(74) Vertreter: Weickmann & Weickmann PartmbB

(56) Entgegenhaltungen:
- WO-A1-96/04699
- CH-A5- 670 965
- GB-A- 1 496 445

## Beschreibung

Die vorliegende Erfindung betrifft eine Maschine zum Herstellen von Drahtelementen mit zwei im Wesentlichen in einer Ebene verlaufenden Schenkeln, deren Scheitel außerhalb der Schenkelebene liegt, sowie ein Verfahren zum Betreiben einer derartigen Maschine.

Derartige Drahtelemente mit zwei im Wesentlichen ein einer Ebene verlaufenden Schenkel, deren Scheitel außerhalb der Schenkelebene liegt, werden in Anlehnung an ähnlich geformte Haarnadeln auch als "Hairpin"-Elemente bezeichnet und beispielsweise bei der Herstellung von Statoreinheiten für Elektromotoren und Generatoren verwendet, wobei aufgrund der zunehmenden Elektrifizierung des Kraftverkehrs zu erwarten ist, dass sich der Markt für derartige Statoreinheiten und somit auch für die genannten Drahtelemente in Zukunft stark vergrößern wird.

Um eine optimale Bildung des Statorfelds in derartigen Statoreinheiten erreichen zu können, sind sich die einzelnen Drahtelemente, die im Betrieb des Stators von Strom durchflossen sind, in ihren Abmessungen und geometrischen Formen zwar ähnlich, aber nicht vollkommen identisch. Vielmehr ist es in der Regel so, dass für den Bau einer der genannten Statoreinheiten mehrere Typen von Drahtelementen benötigt werden, die ihrerseits in der fertig hergestellten Statoreinheit in unterschiedlicher Anzahl vorliegen und sich beispielsweise in ihren Außenabmessungen leicht unterscheiden, aber von ähnlicher Form sind.

Bisher ist es üblich, derartige Drahtelemente in einer Stanz-Biegemaschine mit einem einzelnen Kopf herzustellen, wobei durch die geometrisch relativ anspruchsvolle Form der Drahtelemente eine Vielzahl von Biegeschritten notwendig ist, was die Herstellung der Drahtelemente in der gewünschten Form von vorneherein relativ aufwändig und zeitintensiv macht. Ferner ist durch die hohe geforderte Präzision unter anderem zur Sicherstellung eines genau festgelegten elektrischen Widerstands der Drahtelemente eine hochpräzise Fertigung und die Einhaltung von sehr geringen Toleranzen notwendig, was den Herstellungsprozess der Drahtelemente weiter verlangsamt. Weiterhin hat das aus dem Stand der Technik bekannte Herstellungsverfahren solcher Drahtelemente mit einem einzelnen Kopf den Nachteil, dass zum Erreichen der notwendigen Flexibilität zum Herstellen einer Mehrzahl von sich leicht unterscheidenden Typen von Drahtelementen ein aufwändiges Rüsten der Stanzbiege-Biegemaschine nach der Herstellung von jedem der Typen notwendig ist, so dass in der Regel zunächst große Mengen eines ersten Typs erzeugt werden, anschließend große Mengen eines zweiten Typs usw., die dann anschließend wiederum aufwändig sortiert werden müssen. Zuletzt hat die sequentielle Herstellung der einzelnen Typen von Drahtelementen den Nachteil, dass bei einem Fehler in der Herstellung oder einer nicht eingehaltenen Toleranz große Mengen der Drahtelemente unbrauchbar sein können, was wiederum der niedrigen Flexibilität der Herstellungsvorrichtung geschuldet ist.

GB 1 496 445 A umfasst eine Maschine zum Herstellen von Drahtelementen mit zwei im Wesentlichen in einer Ebene verlaufenden Schenkel, wobei jeweils nur ein einziger Typ von Drahtelementen gefertigt werden kann und bei einer Umstellung auf einen anderen Typ die Maschine umgerüstet werden muss.

Es ist angesichts der eben geschilderten Probleme und Nachteile von aus dem Stand der Technik bekannten Maschinen und Verfahren zur Herstellung von derartigen Drahtelementen die Aufgabe der vorliegenden Erfindung, eine effizientere, einfachere und betriebssicherere Maschine sowie ein Verfahren zum Betreiben dieser Maschine zum Herstellen derartiger Drahtelemente bereitzustellen, durch die die Taktzahl bei der Herstellung erhöht und die Umrüstzeiten verringert werden können, und die sich durch erhöhte Flexibilität bei gleichbleibender Qualität der Drahtelemente auszeichnet.

Hierzu umfasst die erfindungsgemäße Maschine zum Herstellen von Drahtelementen mit zwei im Wesentlichen in einer Ebene verlaufenden Schenkeln, deren Scheitel außerhalb der Schenkelebene liegt, eine Zufuhreinrichtung für im Wesentlichen geradlinige Drahtrohlinge mit einer vorbestimmten Länge, eine erste Biegevorrichtung, welche dazu eingerichtet ist, einen ersten Biegevorgang an von der Zufuhreinrichtung zugeführten Drahtrohlingen auszuführen, um ebene Drahtelemente mit zwei Schenkeln und einem Scheitel zu bilden, eine Mehrzahl von zweiten Biegevorrichtungen, welche jeweils ein unterschiedliches Prägeelement umfassen, wobei die zweiten Biegevorrichtungen sämtlich dazu eingerichtet sind, die Scheitel der ebenen Drahtelemente aus der Schenkelebene heraus zu biegen, eine erste Transportvorrichtung, welche dazu eingerichtet ist, die Drahtelemente von der ersten Biegevorrichtung zu einer aus der Mehrzahl von zweiten Biegevorrichtungen zu überführen, und eine Steuereinrichtung, welche betriebsmäßig mit der Zufuhreinrichtung, der ersten Biegevorrichtung, den zweiten Biegevorrichtungen und der ersten Transportvorrichtung zu deren Steuerung gekoppelt und dazu eingerichtet ist, auf Grundlage von Prozessparametern die erste Transportvorrichtung dazu anzusteuern, die Drahtelemente jeweils zu einer ausgewählten der zweiten Biegevorrichtungen zu überführen.

Erfindungsgemäß wird somit in der eben beschriebenen Maschine zum Herstellen von Drahtelementen der Herstellungsprozess in zwei separate Unterschritte aufgeteilt und es werden von der ersten Biegevorrichtung zunächst einmal geradlinige Drahtrohlinge zu zweidimensionalen Drahtelementen mit zwei Schenkeln gebogen, wobei erst anschließend in einem weiteren Biegevorgang mit Hilfe eines Prägeelements der Scheitel der Drahtelemente aus der Schenkelebene herausgebogen wird.

Es zeigt sich hierbei einerseits, dass durch das Vorsehen von einer Mehrzahl von unterschiedlichen Prägeelementen in der Mehrzahl von zweiten Biegevorrichtungen konfektionierte Scheitelbereiche an den Drahtelementen erzeugt werden können, die unabhängig von der Länge der zugeführten Drahtrohlinge und der exakten Ausrichtung der Schenkel in der Schenkelebene sind. Andererseits zeigt es sich ebenfalls, dass durch die Wahl der Länge der Drahtrohlinge, den durch die erste Biegevorrichtung durchgeführten Biegevorgang und die Mehrzahl von zweiten Biegevorrichtungen ausreichend Freiheitsgrade bei der Herstellung der Drahtelemente geschaffen werden, um sämtliche Typen von Drahtelementen herstellen zu können, die beispielsweise für den Bau der oben bereits angesprochenen Statoreinheiten für Elektromotoren benötigt werden. Dies liegt unter anderem daran, dass die erste Biegevorrichtung in ihrem Betrieb wiederum gewisse Freiheitsgrade und Prozessparameter aufweisen kann, aufgrund derer die von ihr hergestellten Drahtelemente sich unterscheiden können, beispielsweise im Winkel zwischen den beiden Schenkeln oder im Fall von parallel ausgebildeten Schenkeln in deren Abstand. Somit kann mit der erfindungsgemäßen Maschine ohne ein zwischenzeitliches Rüsten eine Vielzahl von verschiedenen Typen von Drahtelementen hergestellt werden, was die Standzeiten der Maschine wesentlich verringert, wobei zusätzlich durch die Vereinfachung und Separierung der Arbeitsschritte, die von der ersten und der jeweiligen zweiten Biegevorrichtung durchgeführt werden, eine wesentlich erhöhte Taktzahl in der Herstellung der Drahtelemente erzielt werden kann.

Da wie angesprochen die von der erfindungsgemäßen Maschine hergestellten Drahtelemente von verschiedenen Typen sein können, kann es vorteilhaft sein, wenn die Maschine ferner ein Magazin zur Aufbewahrung der fertig hergestellten Drahtelemente und eine zweite Transportvorrichtung umfasst, welche dazu eingerichtet ist, die von einer der zweiten Biegevorrichtungen gebogenen Drahtelemente in dem Magazin abzulegen.

Insbesondere kann hierbei in einer ersten Ausführungsform das Magazin eine Mehrzahl von Ablagen umfassen, welche jeweils einer der zweiten Biegevorrichtungen zugeordnet sind, wobei die zweite Transportvorrichtung in diesem Fall dazu eingerichtet ist, ein von einer der zweiten Biegevorrichtungen gebogenes Drahtelement in der dieser zweiten Biegevorrichtung zugeordneten Ablage abzulegen. Auf diese Weise wird eine Ordnung der fertig hergestellten Drahtelemente je nach durchgeführtem Prägevorgang in der entsprechenden zweiten Biegevorrichtung erzielt, unabhängig davon, ob sich die in einer gleichen Ablage abgelegten Drahtelemente möglicherweise in einer anderen Eigenschaft, wie beispielsweise ihren Außenabmessungen, unterscheiden.

Alternativ könnte das Magazin jedoch auch eine Mehrzahl von Ablagen umfassen, wobei die zweite Transportvorrichtung ebenfalls mit der Steuereinrichtung betriebsmäßig gekoppelt ist und dazu betrieben wird, die von einer der zweiten Biegevorrichtungen gebogenen Drahtelemente in einer von der Steuereinrichtung bestimmten Ablage abzulegen. In dieser Ausführungsform ist die Flexibilität der erfindungsgemäßen Maschine und des zugehörigen Magazins noch weiter erhöht, da eine völlig freie Sortierung der fertig hergestellten Drahtelemente in dem Magazin in den einzelnen Ablagen erlaubt wird, so dass beispielweise jeder individuelle Typ von Drahtelement in einer einzelnen Ablage abgelegt werden kann, selbst wenn mehrere Typen von Drahtelementen in der gleichen zweiten Biegevorrichtung geprägt worden sind. Andererseits wäre es jedoch auch denkbar, beispielsweise bereits vordefinierte Sätze von verschiedenen Typen von Drahtelementen mit jeweils einer vorbestimmten Anzahl direkt in einer einzelnen Ablage des Magazins ablegen zu lassen, so dass diese als ganzer Satz gemeinsam wieder entnommen und weiterverwendet werden können.

In jedem Fall bildet das Magazin somit einem Puffer für fertig hergestellte Drahtelemente und die erfindungsgemäße Maschine kann ferner eine Entnahmevorrichtung umfassen, welche dazu eingerichtet ist, aus der Mehrzahl von Ablagen des Magazins jeweils eine vorbestimmte Anzahl von Drahtelementen zu entnehmen, um so einen Satz von Drahtelementen bereitzustellen. Dies schließt selbstverständlich den eben beschriebenen Fall ein, dass der gesamte Satz bereits vorsortiert in einer der Ablagen vorliegt.

Wie bereits weiter oben angedeutet, kann die erste Biegevorrichtung der erfindungsgemäßen Maschine dazu eingerichtet sein, die Drahtelemente derart zu biegen, dass ihre beiden Schenkel im Wesentlichen parallel zueinander sind. Dies führt zwangsläufig mit sich, dass neben dem Scheitel der Drahtelemente noch wenigstens zwei weitere Biegungen an dem derart hergestellten Drahtelement vorliegen müssen. Üblicherweise werden diese beiden zusätzlichen Biegungen relativ nah bei dem Scheitel liegen, in einer Art und Weise, dass sie zusammen mit dem Scheitel ein Dreieck bilden, von dem aus sich die Schenkel dann parallel weg erstrecken.

Während der erfindungsgemäßen Maschine bereits vorbereitete Drahtrohlinge eingegeben werden können und die Zufuhreinrichtung in einem solchen Fall lediglich die Aufgabe übernimmt, diese zu der ersten Biegevorrichtung zu transportieren, so kann in einer anderen Ausführungsform die Zufuhreinrichtung ferner eine Schneidevorrichtung umfassen, welche dazu eingerichtet ist, einen zugeführten Draht in Drahtrohlinge von vorbestimmten Längen zu schneiden, wobei die Schneidevorrichtung vorzugsweise ebenfalls mit der Steuereinrichtung betriebsmäßig gekoppelt ist. Auf diese Weise wird ein weiterer Parameter der letztlich hergestellten Drahtelemente von der Steuereinrichtung der erfindungsgemäßen Maschine kontrolliert, nämlich die Länge der einzelnen Rohlinge und folglich die Gesamtlänge bzw. die Außenabmessungen der letztlich hergestellten Drahtelemente. Des Weiteren hat diese Ausführungsform den Vorteil, dass ein Endlosdraht zu der Schneidvorrichtung zugeführt werden kann, was eine vereinfachte Handhabung der Ausgangsmaterialien bedeutet, verglichen mit einer Vorrichtung, in der bereits Drahtrohlinge eingelegt und transportiert werden müssen.

In diesem Zusammenhang kann die Zufuhreinrichtung zusätzlich oder alternativ eine Abisolierungseinheit umfassen, welche dazu eingerichtet ist, an wenigstens einem Ende der Drahtrohlinge eine den Draht umgebende Isolierung zu entfernen. Eine derartige Abisolierungseinheit kann sowohl zum Betrieb mit zugeführtem Endlosdraht als auch mit bereits zugeführten Drahtrohlingen ausgeführt werden und erlaubt es, die fertig hergestellten Drahtelemente bereits in einem Zustand zu erhalten, in dem ihre Enden elektrisch angeschlossen oder verbunden werden können.

Ferner kann die erfindungsgemäße Maschine wenigstens eine Kontrolleinheit umfassen, welche dazu eingerichtet ist, wenigstens eine Eigenschaft der Drahtrohlinge und/oder der Drahtelemente zu messen und mit vorgegebenen Sollwerten zu vergleichen, wobei die Kontrolleinheit vorzugsweise ebenfalls mit der Steuereinrichtung betriebsmäßig gekoppelt sein kann. Die zu messenden Eigenschaften der Drahtrohlinge oder der Drahtelemente können beispielsweise ihre Länge oder andere geometrische Eigenschaften, wie verschiedene Parameter ihrer Form sein, ihr elektrischer Widerstand, die Stärke des Drahts oder ähnliches. Sollte festgestellt werden, dass einer der gemessenen Parameter außerhalb eines Toleranzbereichs liegt, so können verschiedene Maßnahmen eingeleitet werden, wie beispielsweise die Aussortierung des betreffenden Rohlings bzw. Drahtelements, das Abschalten der Maschine oder ähnliches.

Gemäß einem zweiten Aspekt betrifft die vorliegende Erfindung ein Verfahren zum Betreiben einer erfindungsgemäßen Maschine, umfassend die Schritte eines Zuführens von im Wesentlichen geradlinigen Drahtrohlingen mit einer vorbestimmten Länge, eines Biegens der von der Zufuhreinrichtung zugeführten Drahtrohlinge, um ebene Drahtelemente mit zwei Schenkeln und einem Scheitel zu bilden, eines Überführens der Drahtelemente zu einer aus der Mehrzahl von zweiten Biegevorrichtungen, und einem Prägen der ebenen Drahtelemente, um ihre Scheitel aus der Schenkelebene heraus zu biegen.

Hierbei können die Drahtrohlinge insbesondere aus Kupfer oder einem anderen gut leitfähigen metallischem Material gebildet sein und ggf. eine Isolierung umfassen.

Weitere Merkmale und Vorteile der vorliegenden Erfindung werden aus der nachfolgenden Beschreibung einer Ausführungsform deutlich, wenn diese zusammen mit den beiliegenden Figuren betrachtet wird. Diese zeigen im Einzelnen:
- Figur 1: eine erfindungsgemäße Maschine in einer Draufsicht; und
- Figur 2: eine erfindungsgemäße Maschine in einer schrägen Seitenansicht.

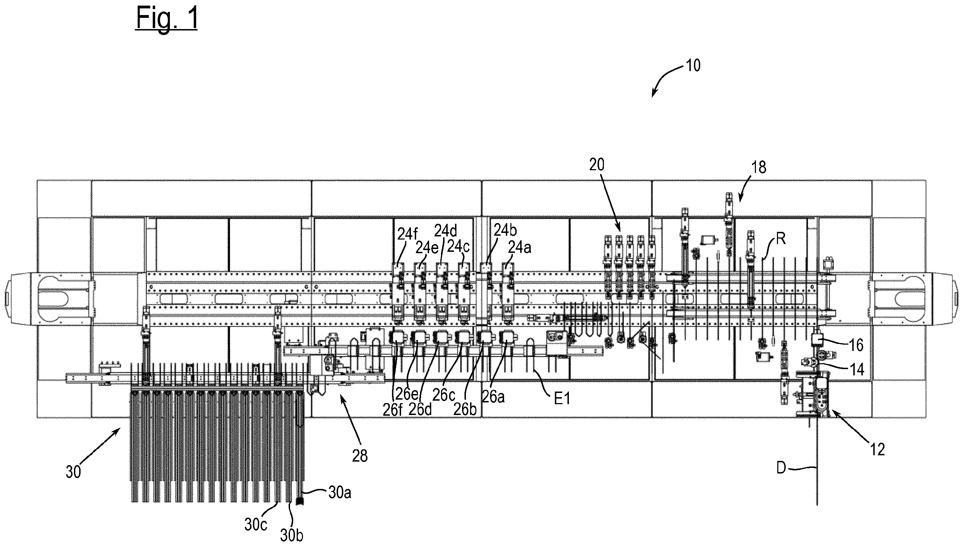

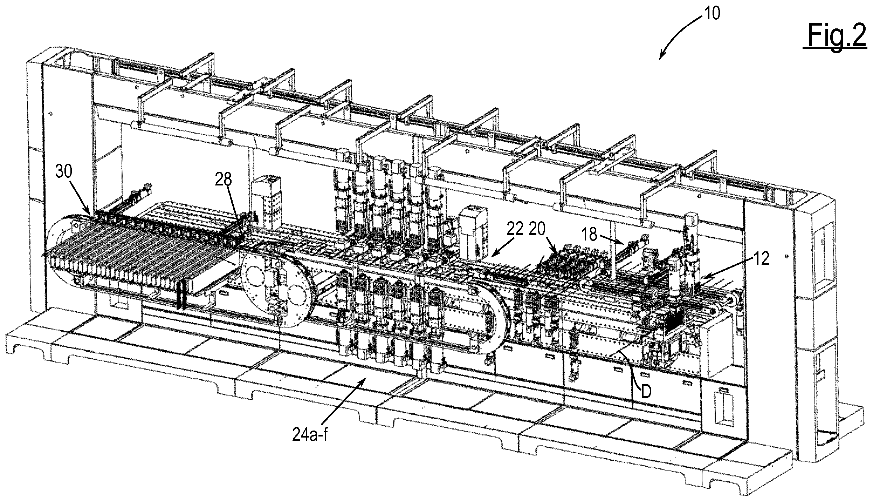

Die Figur 1 zeigt zunächst eine erfindungsgemäße Maschine zum Herstellen von Drahtelementen in einer Draufsicht, wobei die Maschine ganz allgemein mit dem Bezugszeichen 10 bezeichnet ist. In der Figur 2 ist dieselbe Maschine 10 in einer schrägen Seitenansicht gezeigt.

An der in Figur 1 rechten Seite der Maschine 10 wird dieser ein Endlosdraht D zugeführt, der von einer einen Teil der Zufuhreinrichtung 12 bildenden Schneidvorrichtung 14 in geradlinige Drahtrohlinge R geschnitten wird, wobei die Länge der Drahtrohlinge R gemäß Anweisungen von einer nicht gezeigten Steuereinrichtung variiert werden kann.

Die Drahtrohlinge R werden ferner von einer Abisolierungseinheit 16 an einem oder beiden Enden abisoliert, wobei die Abisolierungseinheit 16 ebenfalls der Zufuhreinrichtung 12 zugehörig ist. Anschließend werden die derart zugeschnittenen und abisolierten Rohlinge R von einer Kontrolleinrichtung 18 einer optischen und/oder elektrischen Kontrolle unterzogen, in der festgestellt wird, ob ihre geometrischen und/oder elektrischen Parameter innerhalb eines vorgegebenen Toleranzbereichs liegen.

Der Kontrolleinrichtung 18 nachgeschaltet umfasst die Maschine 10 eine erste Biegevorrichtung 20, in der die bisher geradlinigen Rohlinge R derart gebogen werden, dass sie anschließend in Form von ebenen Drahtelementen mit zwei Schenkeln und einem Scheitel vorliegen, wobei die beiden Schenkel im dargestellten Fall parallel zueinander sind, was jedoch nicht in allen Varianten der Fall sein muss. Die derart gebogenen Drahtelemente sind in den Figuren 1 und 2 mit den Bezugszeichen E1 bezeichnet. Hierbei ist die erste Biegevorrichtung 20 derart eingerichtet, dass gewisse Parameter der Elemente E1 anpassbar sind, beispielsweise der Winkel des Scheitels und der Abstand der beiden parallelen Schenkel.

Hiernach werden die derart gebogenen Drahtelemente E1 von einer ersten Transportvorrichtung 22 aufgenommen, die die Drahtelemente E1 zunächst einmal um 180° dreht und dann zu einer hintereinander angeordneten Mehrzahl von zweiten Biegevorrichtungen 24a-f transportiert, die jeweils ein Prägeelement 26a-f aufweisen, wobei sich die einzelnen Prägeelemente 26a-f untereinander unterscheiden.

Gemäß der Steuerung durch die nicht gezeigte Steuereinheit wird jedes der Drahtelemente E1 zu einer der zweiten Biegevorrichtungen 24a-f transportiert und von der entsprechenden Biegevorrichtung dann derart geprägt, dass der Scheitel des Elements E1 aus der Ebene der Schenkel herausgebogen wird. Hierdurch liegen nach den zweiten Biegevorrichtungen 24a-f Drahtelemente E2 mit zwei im Wesentlichen in einer Ebene verlaufenden Schenkeln vor, deren Scheitel außerhalb der Schenkelebene liegt. Wie bereits angedeutet, können sich die Elemente E2 je nach Steuerung der Schneidevorrichtung 12, der ersten Biegevorrichtung 20 und der Auswahl der verwendeten zweiten Biegevorrichtung 24a-f in mehreren Parametern unterscheiden, beispielsweise der Länge ihrer Schenkel, des Winkels ihres Scheitels und des Ausmaßes der Biegung des Scheitels aus der Schenkelebene heraus, der dann beispielsweise den Versatz des Scheitels gegenüber der Schenkelebene festlegt.

Die fertig hergestellten Drahtelemente E2 werden anschließend von einer zweiten Transportvorrichtung 28 zu einem Magazin 30 transportiert, das eine Mehrzahl von Ablagen aufweist, von denen lediglich drei Ablagen 30a - 30c bezeichnet sein sollen.

Hierbei kann die Steuerung der zweiten Transportvorrichtung 28 beispielsweise derart von der nicht gezeigten Steuereinrichtung durchgeführt werden, dass sämtliche fertig hergestellte Drahtelemente E2 vom selben Typ, d.h. mit denselben Eigenschaften, auf der gleichen Ablage des Magazins 30 abgelegt werden, beispielsweise wie in Figur 2 zu erkennen auf der ersten Ablage 30a.

Sobald eine gewünschte Anzahl von fertig hergestellten Drahtelementen E2 von diesem Typ in dem Magazin 30 abgelegt worden ist, kann die nicht gezeigte Steuereinrichtung die Steuerung von wenigstens einer der von ihr gesteuerten Einrichtungen ändern, d.h. beispielsweise der Schneidevorrichtung 14, der ersten Biegevorrichtung 20 und/oder der Auswahl der zweiten Biegevorrichtung 24a-f, so dass anschließend ein zweiter Typ von fertig hergestellten Drahtelementen E2 erzeugt wird, der dann dementsprechend in einer der weiteren Ablagen des Magazins 30 abgelegt werden kann, beispielsweise der zweiten Ablage 30b. Ferner kann dem Magazin 30 dann noch eine nicht gezeigte Entnahmevorrichtung zugeordnet sein, die aus verschiedenen der Ablagen des Magazins 30 jeweils eine vorbestimmte Anzahl von fertig hergestellten Drahtelementen E2 entnimmt, um so einen Satz von Drahtelementen E2 zur weiteren Bearbeitung bereitzustellen.

## Patentansprüche

1. Maschine zum Herstellen von Drahtelementen mit zwei im Wesentlichen in einer Ebene verlaufenden Schenkeln, deren Scheitel außerhalb der Schenkelebene liegt, umfassend:
- eine Zufuhreinrichtung (12) für im Wesentlichen geradlinige Drahtrohlinge (R) mit einer vorbestimmten Länge;
- eine erste Biegevorrichtung (20), welche dazu eingerichtet ist, einen ersten Biegevorgang an von der Zufuhreinrichtung (12) zugeführten Drahtrohlingen (R) auszuführen, um ebene Drahtelemente (E1) mit zwei Schenkeln und einem Scheitel zu bilden;
- eine Mehrzahl von zweiten Biegevorrichtungen (24a-f), welche jeweils ein unterschiedliches Prägeelement (26a-f) umfassen, wobei die zweiten Biegevorrichtungen (24a-f) sämtlich dazu eingerichtet sind, die Scheitel der ebenen Drahtelemente (E1) aus der Schenkelebene heraus zu biegen;
- eine erste Transportvorrichtung (22), welche dazu eingerichtet ist, die Drahtelemente (E1) von der ersten Biegevorrichtung (20) zu einer aus der Mehrzahl von zweiten Biegevorrichtungen (24a-f) zu überführen; und
- eine Steuereinrichtung, welche betriebsmäßig mit der Zufuhreinrichtung (12), der ersten Biegevorrichtung (12), den zweiten Biegevorrichtungen (24a-f) und der ersten Transportvorrichtung zu deren Steuerung gekoppelt und dazu eingerichtet ist, auf Grundlage von Prozessparametern die erste Transportvorrichtung (22) dazu anzusteuern, die Drahtelemente (E1) jeweils zu einer ausgewählten der zweiten Biegevorrichtungen (24a-f) zu überführen.

2. Maschine nach Anspruch 1, ferner umfassend ein Magazin (30) zur Aufbewahrung von fertig hergestellten Drahtelementen (E2) und eine zweite Transportvorrichtung (28), welche dazu eingerichtet ist, die von einer der zweiten Biegevorrichtungen (24a-f) gebogenen Drahtelemente (E2) in dem Magazin (30) abzulegen.

3. Maschine nach Anspruch 2, wobei das Magazin (30) eine Mehrzahl von Ablagen (30a-c) umfasst, welche jeweils einer der zweiten Biegevorrichtungen (24a-f) zugeordnet sind, wobei zweite Transportvorrichtung (28) dazu eingerichtet ist, ein von einer der zweiten Biegevorrichtungen (24a-f) gebogenes Drahtelement (E2) in der dieser zweiten Biegevorrichtung (24a-f) zugeordneten Ablage (30a-c) abzulegen.

4. Maschine nach Anspruch 2, wobei das Magazin (30) eine Mehrzahl von Ablagen (30a-c) umfasst, wobei die zweite Transportvorrichtung (28) ebenfalls mit der Steuereinrichtung betriebsmäßig gekoppelt ist und dazu betrieben wird, die von einer der zweiten Biegevorrichtungen (24a-f) gebogenen Drahtelemente (E2) in einer von der Steuereinrichtung bestimmten Ablage (30a-c) abzulegen.

5. Maschine nach Anspruch 3 oder 4, ferner umfassend eine Entnahmevorrichtung, welche dazu eingerichtet ist, aus der Mehrzahl von Ablagen (30a-c) jeweils eine vorbestimmte Anzahl von Drahtelementen (E2) zu entnehmen, um so einen Satz von Drahtelementen (E2) bereitzustellen.

6. Maschine nach einem der vorhergehenden Ansprüche, wobei die erste Biegevorrichtung dazu eingerichtet ist, die Drahtelemente (E1) derart zu biegen, dass ihre beiden Schenkel im Wesentlichen parallel zueinander sind.

7. Maschine nach einem der vorhergehenden Ansprüche, wobei die Zufuhreinrichtung (12) ferner eine Schneidevorrichtung (14) umfasst, welche dazu eingerichtet ist, einen zugeführten Draht (D) in Drahtrohlinge (R) von vorbestimmter Länge zu schneiden.

8. Maschine nach Anspruch 7, wobei die Schneidevorrichtung (14) ebenfalls mit der Steuereinrichtung betriebsmäßig gekoppelt ist.

9. Maschine nach einem der vorhergehenden Ansprüche, wobei die Zufuhreinrichtung (12) ferner eine Abisolierungseinheit (16) umfasst, welche dazu eingerichtet ist, an wenigstens einem Ende der Drahtrohlinge (R) eine den Draht umgebende Isolierung zu entfernen.

10. Maschine nach einem der vorhergehenden Ansprüche, ferner umfassend wenigstens eine Kontrolleinheit (18), welche dazu eingerichtet ist, wenigstens eine Eigenschaft der Drahtrohlinge (R) und/oder der Drahtelemente (E1, E2) zu messen und mit vorgegebenen Sollwerten zu vergleichen.

11. Maschine nach Anspruch 10, wobei die Kontrolleinheit (18) vorzugsweise ebenfalls mit der Steuereinrichtung betriebsmäßig gekoppelt ist.

12. Verfahren zum Betreiben einer Maschine nach einem der vorhergehenden Ansprüche, umfassend die folgenden Schritte:
- Zuführen von im Wesentlichen geradlinigen Drahtrohlingen (R) mit einer vorbestimmten Länge;
- Biegen der von der Zufuhreinrichtung (12) zugeführten Drahtrohlinge (R), um ebene Drahtelemente (E1) mit zwei Schenkeln und einem Scheitel zu bilden;
- Überführen der Drahtelemente (E1) zu einer aus der Mehrzahl von zweiten Biegevorrichtungen (24a-f); und
- Prägen der ebenen Drahtelemente (E1), um ihre Scheitel aus der Schenkelebene heraus zu biegen.

13. Verfahren nach Anspruch 12, wobei die Drahtrohlinge (R) aus Kupfer gebildet sind und gegebenenfalls eine Isolierung umfassen.

## Claims

1. Machine for producing wire elements having two legs extending substantially in one plane, the apex of which legs lies outside the plane of the legs, the machine comprising:
- a feed apparatus (12) for substantially straight wire blanks (R) having a predetermined length;
- a first bending device (20), which is designed to carry out a first bending process on wire blanks (R) fed from the feed apparatus (12) in order to form planar wire elements (E1) having two legs and an apex;
- a plurality of second bending devices (24a-f) each comprising a different stamping element (26a-f), wherein the second bending devices (24a-f) are all designed to bend the apices of the planar wire elements (E1) out of the leg plane;
- a first transport device (22), which is designed to transfer the wire elements (E1) from the first bending device (20) to one of the plurality of second bending devices (24a-f); and
- a controller, which is operatively coupled to the feed apparatus (12), the first bending device (12), the second bending devices (24a-f) and the first transport device for control thereof and is designed to, on the basis of process parameters, control the first transport device (22) to transfer each of the wire elements (E1) to a selected bending device of the second bending devices (24a-f).

2. Machine according to claim 1, further comprising a magazine (30) for storing finished wire elements (E2) and a second transport device (28) which is designed to store the wire elements (E2) bent by one of the second bending devices (24a-f) in the magazine (30).

3. Machine according to claim 2, wherein the magazine (30) comprises a plurality of supports (30a-c) each associated with one of the second bending devices (24a-f), wherein the second transport device (28) is designed to deposit a wire element (E2) bent by one of the second bending devices (24a-f) in the support (30a-c) assigned to this second bending device (24a-f).

4. Machine according to claim 2, wherein the magazine (30) comprises a plurality of supports (30a-c), wherein the second transport device (28) is also operatively coupled to the controller and is operated to deposit the wire elements (E2) bent by one of the second bending devices (24a-f) in a support (30a-c) specified by the controller.

5. Machine according to either claim 3 or claim 4, further comprising a removal device, which is designed to remove a predetermined number of wire elements (E2) from each of the plurality of supports (30a-c) in order to thus provide a set of wire elements (E2).

6. Machine according to any of the preceding claims, wherein the first bending device is designed to bend the wire elements (E1) in such a way that the two legs thereof are substantially parallel to one another.

7. Machine according to any of the preceding claims, wherein the feed apparatus (12) further comprises a cutting device (14) which is designed to cut a fed wire (D) into wire blanks (R) of predetermined length.

8. Machine according to claim 7, wherein the cutting device (14) is also operatively coupled to the controller.

9. Machine according to any of the preceding claims, wherein the feed apparatus (12) further comprises a stripping unit (16) which is designed to remove insulation surrounding the wire on at least one end of the wire blanks (R).

10. Machine according to any of the preceding claims, further comprising at least one checking unit (18), which is designed to measure at least one property of the wire blanks (R) and/or the wire elements (E1, E2) and to compare it with predetermined target values.

11. Machine according to claim 10, wherein the checking unit (18) is preferably also operatively coupled to the controller.

12. Method for operating a machine according to any of the preceding claims, comprising the following steps:
- feeding substantially straight wire blanks (R) having a predetermined length;
- bending the wire blanks (R) fed from the feed apparatus (12) in order to form planar wire elements (E1) having two legs and an apex;
- transferring the wire elements (E1) to one of the plurality of second bending devices (24a-f); and
- stamping the planar wire elements (E1) in order to bend the apices out of the plane of the legs.

13. Method according to claim 12, wherein the wire blanks (R) are made of copper and optionally have insulation.

## Revendications

1. Machine pour la fabrication d'éléments en fil métallique avec deux branches s'étendant essentiellement dans un plan, dont le sommet se situe en dehors du plan des branches, comprenant :
- un dispositif d'alimentation (12) pour des ébauches de fil (R) sensiblement rectilignes d'une longueur prédéterminée ;
- un premier dispositif de pliage (20) adapté pour effectuer une première opération de pliage sur des ébauches de fil (R) fournies par le dispositif d'alimentation (12) afin de former des éléments de fil plans (21) ayant deux branches et un sommet ;
- une pluralité de deuxièmes dispositifs de pliage (24a-f) comprenant chacun un élément d'estampage différent (26a-f), les deuxièmes dispositifs de pliage (24a-f) étant tous adaptés pour plier les sommets des éléments de fil plats (21) hors du plan de la branche ;
- un premier dispositif de transport (22) adapté pour transférer les éléments de fil (E1) du premier dispositif de pliage (20) à l'un de la pluralité de deuxièmes dispositifs de pliage (24a-f) ; et
- un dispositif de commande couplé de manière opérationnelle au dispositif d'alimentation (12), au premier dispositif de pliage (12), aux deuxièmes dispositifs de pliage (24a-f) et au premier dispositif de transport pour les commander, et adapté pour commander, sur la base de paramètres de processus, le premier dispositif de transport (22) pour transférer les éléments de fil (E1) vers l'un sélectionné des deuxièmes dispositifs de pliage (24a-f), respectivement.

2. Machine selon la revendication 1, comprenant en outre un magasin (30) de stockage d'éléments de fil (E2) finis et un deuxième dispositif de transport (28) adapté pour déposer dans le magasin (30) les éléments de fil pliés (E2) par l'un des deuxièmes dispositifs de pliage (24a-f).

3. Machine selon la revendication 2, dans laquelle le magasin (30) comprend une pluralité de dépôts (30a-c) associés chacun à un des deuxièmes dispositifs de pliage (24a-f), des deuxièmes moyens de transport (28) étant adaptés pour déposer un élément de fil plié (E2) par un des deuxièmes dispositifs de pliage (24a-f) dans le dépôt (30a-c) associé à ce deuxième dispositif de pliage (24a-f).

4. Machine selon la revendication 2, dans laquelle le magasin (30) comprend une pluralité de dépôts (30a-c), le deuxième dispositif de transport (28) étant également couplé fonctionnellement au dispositif de commande et étant actionné pour déposer les éléments de fil pliés (E2) par l'un des deuxièmes dispositifs de pliage (24a-f) dans un dépôt (30a-c) déterminé par le dispositif de commande.

5. Machine selon la revendication 3 ou 4, comprenant en outre un dispositif de prélèvement adapté pour prélever un nombre prédéterminé d'éléments de fil (E2) dans chacun de la pluralité de dépôts (30a-c), de manière à fournir un ensemble d'éléments de fil (E2).

6. Machine selon l'une des revendications précédentes, dans laquelle le premier dispositif de pliage est adapté pour plier les éléments de fil (E1) de manière à ce que leurs deux branches soient sensiblement parallèles entre elles.

7. Machine selon l'une des revendications précédentes, dans laquelle le dispositif d'alimentation (12) comprend en outre un dispositif de coupe (14) adapté pour couper un fil (D) alimenté en ébauches de fil (R) de longueur prédéterminée.

8. Machine selon la revendication 7, dans laquelle le dispositif de coupe (14) est également couplé opérativement au dispositif de commande.

9. Machine selon l'une des revendications précédentes, dans laquelle le dispositif d'alimentation (12) comprend en outre une unité de dénudage (16) adaptée pour retirer, à au moins une extrémité des ébauches de fil (R), un isolant entourant le fil.

10. Machine selon l'une des revendications précédentes, comprenant en outre au moins une unité de contrôle (18) adaptée pour mesurer au moins une caractéristique des ébauches de fil (R) et/ou des éléments de fil (E1, E2) et la comparer à des valeurs de consigne prédéterminées.

11. Machine selon la revendication 10, l'unité de contrôle (18) étant de préférence également couplée opérativement avec le dispositif de commande.

12. Procédé pour opérer une machine selon l'une des revendications précédentes, comprenant les étapes suivantes :
- alimenter des ébauches de fil (R) sensiblement rectilignes d'une longueur prédéterminée ;
- plier des ébauches de fil (R) fournies par le dispositif d'alimentation (12) pour former des éléments de fil plats (E1) avec deux branches et un sommet ;
- transférer des éléments en fil métallique (E1) vers l'un de la pluralité de deuxièmes dispositifs de pliage (24a-f) ; et
- gaufrer les éléments de fil plans (E1) afin de plier leurs sommets hors du plan des branches.

13. Procédé selon la revendication 12, dans lequel les ébauches de fil (R) sont formées de cuivre et comprennent éventuellement un isolant.
